Europäisches Patentamt

European Patent Office

Office européen des brevets

(11) Publication number: **0 411 837 A1**

# EUROPEAN PATENT APPLICATION

(21) Application number: **90308253.5**

(51) Int. Cl.5: **F16D 65/58**

(22) Date of filing: **27.07.90**

(30) Priority: **31.07.89 US 386913**

(43) Date of publication of application:
**06.02.91 Bulletin 91/06**

(84) Designated Contracting States:
**DE ES FR GB IT**

(71) Applicant: **KELSEY-HAYES COMPANY**
**38481 Huron River Drive**
**Romulus, Michigan 48174(US)**

(72) Inventor: **Evans, Anthony Colin**
**55400 W. Eight Mile Road**
**Northville, Michigan 48167(US)**

(74) Representative: **Morrall, Roger et al**
**Massey-Ferguson Patent Department**
**Stareton near Kenilworth Warwickshire CV8**
**2LJ(GB)**

(54) Hydraulic drum brake assembly.

(57) In an hydraulic drum brake and parking brake assembly (8), when an hydraulic actuator (28) is operated to engage an opposed pair of brake shoes (10, 12) with a brake drum (34) after a predetermined amount of wear had occurred on the friction pads (11, 13) of the brake shoes, a torsion spring (48) adjusts a cam (42) in the parking brake portion of the mechanism to compensate for the wear. The parking brake will thus operate properly despite the wear.

FORWARD
WHEEL ROTATION

FIG. 1

EP 0 411 837 A1

# HYDRAULIC DRUM BRAKE ASSEMBLY

## BACKGROUND OF THE INVENTION

This invention generally relates to a hydraulic drum brake and parking brake assembly for an automotive vehicle, and more specifically to an automatic wear adjuster for adjusting the drum to friction pad clearance as the friction pad wears.

## SUMMARY OF THE INVENTION

In accordance with the invention, as a predetermined amount of friction pad wear occurs, an adjustment of the parking brake mechanism is automatically made upon operation of the hydraulic brake. Therefore, the parking brake will always operate properly even though it may not have been used for a long time and wear of the friction pads has occurred.

The invention will be more readily understood when considered in conjunction with the accompanying drawings.

## BRIEF DESCRIPTION OF THE DRAWINGS

FIG. 1 is an outboard elevational view of a typical right rear leading-trailing hydraulic drum brake including a parking brake assembly constructed in accordance with the invention.

FIG. 2 is a sectional view generally taken along line 2-2 of FIG. 1, showing the connecting link between the opposite brake shoes in phantom and including peripheral portions of the brake drum in section;

FIG. 3 is a fragmentary sectional view generally taken along line 3-3 of FIG. 2;

FIG. 4 is a fragmentary sectional view generally taken along line 4-4 of FIG. 2; and

FIG. 5 is an exploded perspective view of the parking brake assembly.

## DETAILED DESCRIPTION OF THE INVENTION

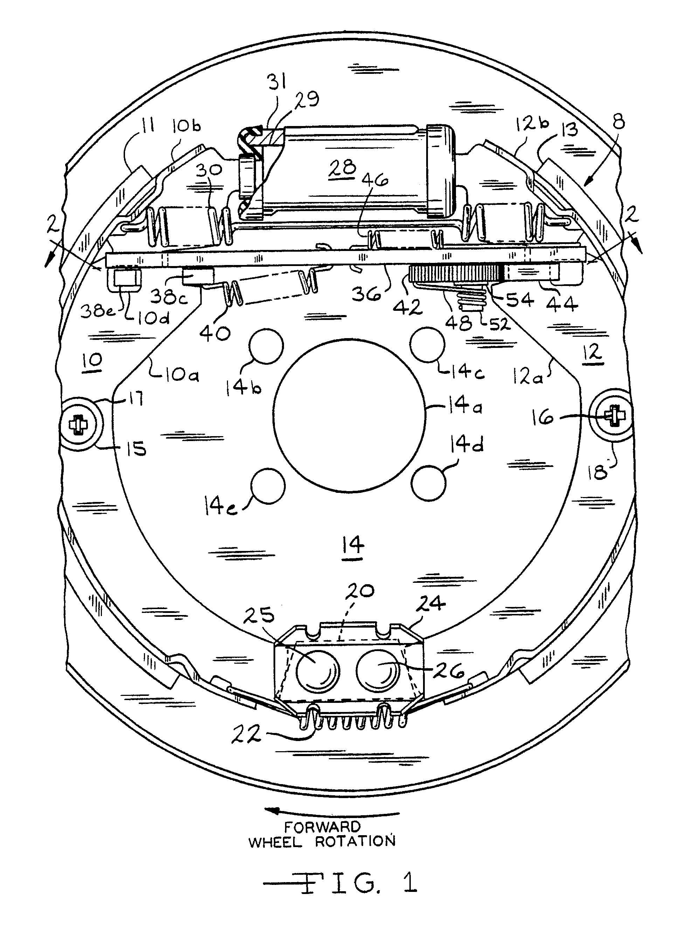

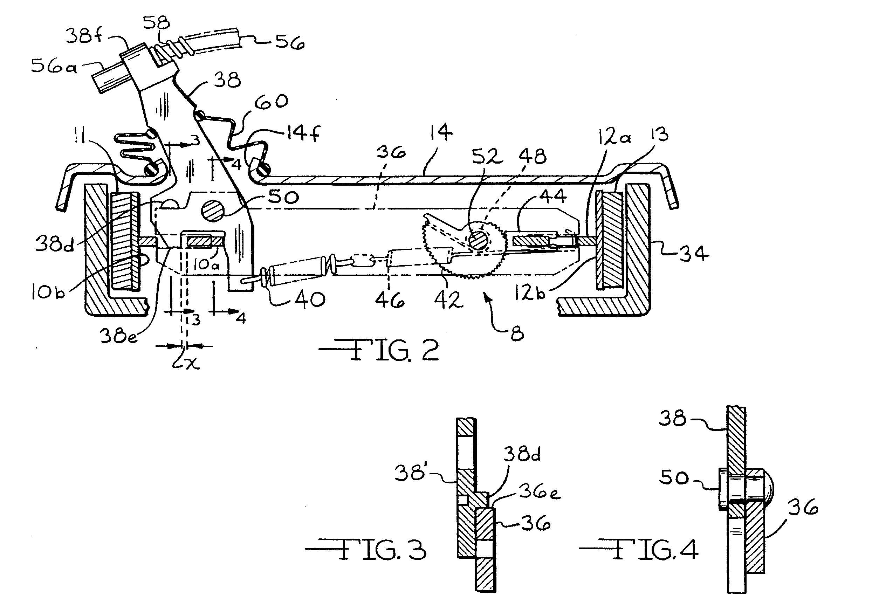

With reference to the drawings, FIGS. 1 and 2 show a typical automotive leading-trailing hydraulic drum brake including a manual parking brake assembly 8 for the right rear wheel of a motor vehicle, the assembly 8 being constructed in accordance with my invention. The drum brake includes a pair of conventional arcuate brake shoes 10 and 12 of generally T-shaped cross section including web portions 10a and 12a and table 10b and 12b. The brake shoes 10 and 12 are typically held against an inboard backing plate 14 respectively by a pair of tie rods 15 and 16 (FIG. 1) extending through backing plate 14, webs 10a and 12a of the respective brake shoes, and respectively engaging the slotted openings of spring loaded retaining members 17 and 18.

Backing plate 14 has a central aperture 14a for passing over the axle (not shown) and four bolt-receiving holes 14b, 14c, 14d, and 14e for attaching the backing plate to the frame (not shown) of a vehicle by threaded fasteners.

Adjacent their lower ends, web portions 10a and 12a of brake shoes 10 and 12 are held against an abutment 20 by tension spring 22 and retaining plate 24. Abutment 20 and retaining plate 24 are typically mounted on a raised boss portion (not shown) of the backing plate 14 by a pair of rivets 25 and 26. Tables 10b and 12b of brake shoes 10 and 12 are provided respectively with a pair of friction pads 11 and 13.

A typical double-acting hydraulic cylinder 28 is mounted on the backing plate 14 between the upper ends of the brake shoes 10 and 12 as shown in FIG. 1. A tension spring 30 holds the upper end portions of brake shoe webs 10a and 12a respectively against a pair of pistons 29 (only one being shown) of the brake cylinder 28. When hydraulic fluid is supplied to brake cylinder 28, as by operation of a vehicle brake pedal, pistons 29 move outwardly forcing the upper end portions of the brake shoes 10 and 11 apart and affect engagement of friction pads 11 and 13 with the inner cylindrical portion of brake drum 34 as shown in FIG. 2. Rotation of brake drum 34 when the vehicle is moving tends to rotate the brakes shoes 10 and 12 when the friction pads 11 and 13 are engaged therewith. However, abutment 20 and brake cylinder 28 prevent the brake shoes from rotating, in either direction. Braking torque is transmitted to the vehicle frame through abutment 20.

The friction pads 11 and 13 are also movable into engagement with the brake drum 34 by a manually operable parking brake mechanism, and in accordance with my invention, the parking brake mechanism is automatically adjusted upon a predetermined amount of wear of the friction pads 11 and 13, when the hydraulic cylinder 28 is actuated.

The parking brake includes a relatively flat operating link 36 shown in phantom in FIG. 2, an operating lever 38, a tension spring 40, a toothed cam 42, a load-carrying cam-positioning bearing 44, a tension spring 46 shown in phantom in FIG.

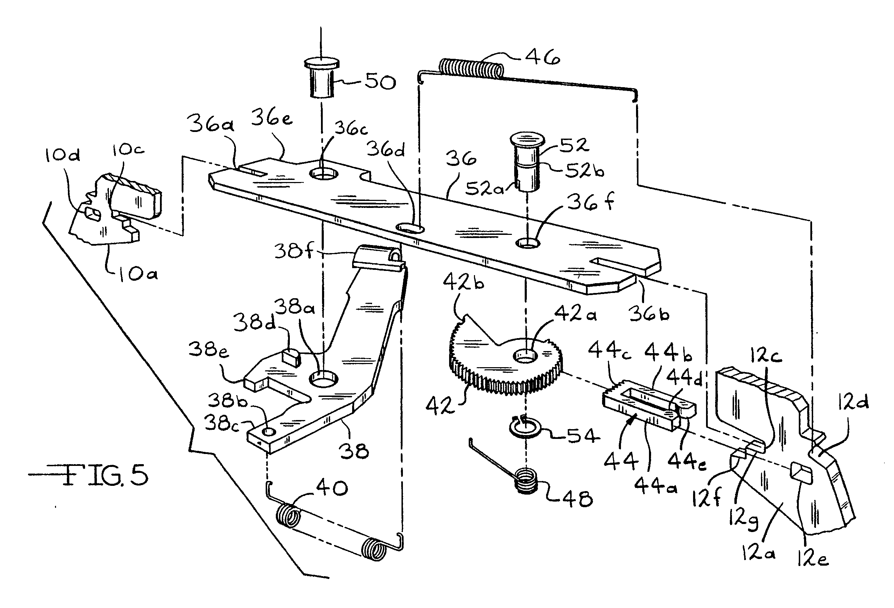

2, and a torsion spring 48. These parts are most clearly shown in the exploded view of FIG. 5.

Link 36 has a notch 36a at one end for loose cooperative engagement with web 10a at a notch 10c therein and a notch 36b at the opposite end for loose cooperative engagement with the web 12a at a notch 12c therein. Link 36 has a hole 36c and the lever 38 has a hole 38a for reception of a rivet 50 pivotally connecting link 36 and lever 38.

Spring 40 is hooked at one end in hole 36d of link 36 and at the opposite end in hole 38b of arm portion 38c adjacent an inner end of the lever 38 to normally bias lever 38 pivotally about the rivet 50 such that raised stop 38d of lever 38 engages link 36 at an edge surface portion 36e thereof.

Spring 46 is hooked at one end in hole 36d and at the opposite end in notch 12d of web 12a, thereby biasing link 36 toward web 12a. A pin 52 is mounted in hole 36f of link 36 and in a hole 42a in the toothed cam 42 to pivotally interconnect the link 36 and cam 42. Pin 52 extends through link 36 and is securely affixed thereto by any convenient means to prevent rotation relative to link 36. Cam 42 is rotatingly attached to pin 52 and held in place by snap ring 54. One end of the torsion spring 48 is held in slot 52c of pin 52 with the opposite end thereof received in notch 42b of cam 42.

Bearing 44 is generally U-shaped and includes a pair of opposed leg portions 44a and 441, and an outwardly toothed bight portion 44c. Free end portions of legs 44a and 44b have inwardly extending knob portions 44d and 44e received in hole 12e of web 12a. Ihe inner side of bight portion 44c engages web portion 12a at edge portion 12g adjacent ledge 12f thereon and extending to notch 12c.

Projection 38e of lever 38 normally extends, with clearance, into hole 10d of web 10a, as best shown in FIGS. 1 and 2. Arm 38c normally engages web 10a, and the projection 38e is normally a defined distance x (FIG. 2) from the corresponding portion of the web 10a defining hole 10d.

The outer end portion 38f of the lever 38 is reversely curved, as best shown in FIG. 5, for reception of a cable 56 (FIG 2) having an enlarged end 56a anchored in place by a spring 58 in a conventional manner. A rubber boot 60 seals opening 14f in backing plate 14 through which lever 38 extends. The opposite end of cable 56 is connected to a lever mechanism (not shown) manually operable by a driver of the vehicle.

## OPERATION

Upon normal operation of the parking brake, the cable 56 will be moved to the right as viewed in FIG. 2, lever 38 will thus be pivoted clockwise about rivet 50 overcoming the force of the spring 40. Arm 38c will move web 10a to the left overcoming the force of spring 30, thereby moving friction pad 11 into engagement with the inner periphery of brake drum 34. Upon further pivotal movement of lever 38, the center of pivotal movement will shift to the point of contact of arm 38c with the web 10a and rivet 50 will translate to the right, moving link: 36, pin 52, cam 42, bearing 44, and web 12a to the right, against the force of the spring 30, and thereby causing engagement of friction pad 13 with the inner periphery of brake drum 34.

Upon the release of the parkirg brake, spring 30 will return brake shoes 10 and 12 and friction pads 11 and 13 to the disengaged position with respect to the brake drum 34 and the spring 40 will return lever 38 to its normal disengaged position shown.

Upon normal operation of the hydraulic brake, the left piston 29 as shown in FIG. 1 will move the brake shoe 10 to the left, and the right piston (not shown) will move the brake shoe 12 to the right along with the bearing 44, cam 42, pin 52, link 36, rivet 50, and lever 38. The relative movement of the brake shoes 10 and 12 away from each other and the consequent engagement of the friction pads 11 and 13 with the brake drum 34 moves the projection 38e, relative to the web 10a, through a distance x shown in FIG. 2 designated as the friction pad "running clearance".

Spring 40 is stronger than spring 46, therefore, as the friction pads 11 and 13 become worn, additional movement of the brake shoes 10 and 12 apart from each other becomes necessary for engagement of the worn friction pads 11 and 13 with brake drum 34. This additional movement, after the projection 38e engages the corresponding edge of hole 10d in web 10a, is accompanied by stretching of spring 46. The stretching or elongation of the spring 46 beyond its normal length releases the pressure it normally exerts between the cam 42 and the bearing 44. The cam 42 is biased, counterclockwise as viewed in FIG. 2, by the torsion spring 48, thus when the pressure between cam 42 and bearing 44 is released, cam 42 will rotate to present a larger effective radius to bearing 44 thereby compensating for the wear of the friction pads 11 and 13. The cooperation between the teeth of cam 42 and the teeth of bearing 44 prevents rotation of the cam 42 except as required. The next time the parking brake is operated, the friction pads 11 and 13, though worn, will nevertheless firmly engage the brake drum 34, because of the compensation provided by the cam 42.

Various modifications may be made in the structure shown and described without departing from the scope of the invention as set forth in the following claims.

**Claims**

1. An automatic wear adjuster for a drum brake assembly (8) including a cylindrical brake drum (34), a pair of oppositely disposed brake shoe assemblies (10, 12) each including a web (10a, 12a) having an arcuate outer edge with an arcuate table (10b, 12b) secured to said outer edge of said web (10a, 10b) with a friction pad (11, 13) affixed to the outer of surface of said table and operatively engageable with the inner surface of said drum (34), and means (29) for actuating said brake assembly (8), the wear adjuster being characterised by the inclusion of an operating link (36) for loose cooperative engagement adjacent opposite ends respectively with said webs (10a, 12a), an operating lever (38) pivotally mounted on said link (36) adjacent one end thereof for operative engagement with one (10a) of said webs, and a cam (42) pivotally mounted on said link (36) adjacent the opposite end thereof for operative engagement with the other (12a) of said webs, said cam (42) being provided with an adjusting surface which presents increasingly larger radii to said other web (12a) as said cam (42) is pivoted, said cam (42) being automatically angularly adjusted as required, upon actuation of the associated brake assembly (8), to present incrementally larger radii to said other web (12a) thereby compensating for corresponding incremental amounts of wear of said associated friction pads (11, 13).

2. An automatic wear adjuster as defined in Claim 1 characterised by the inclusion of a torsion spring (48) angularly biasing said cam (42) in a direction wherein its radius presented to said other web (12a) is effectively increased.

3. An automatic wear adjuster as defined in Claim 1 or Claim 2 characterised in that said adjusting surface of said cam (42) is toothed and a bearing (44) is provided for mounting on said other web (12a), said bearing (44) also being toothed for normal interlocking engagement with said cam (42).

4. An automatic wear adjuster using any of Claims 1 to 3 characterised by the inclusion of a first tension spring (46) for operative connection adjacent one end to said other web and adjacent an opposite end to said operating link (36), said first tension spring (46) normally biasing said bearing (44) into engagement with said cam (42).

5. An automatic wear adjuster as defined in any one of Claims 1 to 4 characterised in that said operating lever (38) is provided with a stop (38d) engageable with said link (36), with an arm (38c) adjacent an inner end normally for engagement with said one web (10a), and with a projection (38e) adjacent said inner end normally for extension with clearance into a hole (10d) in said one web (10a).

6. An automatic wear adjuster as defined in Claim 5 characterised by the inclusion of a second tension spring (40) operatively connected adjacent one end to said link (36) and adjacent an opposite end to said arm (38), said second tension spring (40) being stronger than said first tension spring (46).

7. A drum brake assembly (8) characterised by the inclusion of an automatic wear adjuster as defined in any one of Claims 1 to 6.

FORWARD
WHEEL ROTATION

FIG. 1

FIG. 2

FIG. 3

FIG. 4

EP 0 411 837 A1

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | DE-B-2606925 (TOKICO)<br>* figures 2, 3 * | 1 | F16D65/58 |
| X |  | 3, 4 |  |
| Y | DE-A-2530930 (TEVES)<br>* figures 1, 3, 5 * | 1 |  |
| X |  | 2, 3, 5 |  |
| X | GB-A-2132291 (TEVES)<br>* figure 1 * | 4, 6 |  |
| A | US-A-4015693 (HAYASHIDA ET AL.) |  |  |

TECHNICAL FIELDS SEARCHED (Int. Cl.5 )

F16D

The present search report has been drawn up for all claims

| Place of search | Date of completion of the search | Examiner |
|---|---|---|
| BERLIN | 09 NOVEMBER 1990 | LUDWIG H.J. |